# EUROPEAN PATENT APPLICATION

(11) **EP 2 789 956 A1**
(43) Date of publication of application: **15.10.2014**
(21) Application number: 13163347.1
(22) Date of filing: 11.04.2013
(51) Int. Cl.: F25J 1/00, F25J 1/02, F25J 3/02

(54) **Method of liquefying a contaminated hydrocarbon-containing gas stream**

(71) Applicant: Shell Internationale Research Maatschappij B.V., 2596 HR The Hague (NL)
(72) Inventor: Assink, Gerrit Jan Barend, 1031 HW Amsterdam (NL); Van Aken, Michiel Gijsbert, 2596 HR The Hague (NL); Wolters-Den Breejen, Mariska, 1031 HW Amsterdam (NL)
(74) Representative: Matthezing, Robert Maarten

(57) **Abstract**

The present invention provides a method of liquefying a contaminated hydrocarbon-containing gas stream, the method comprising at least the steps of:
(a) providing a contaminated hydrocarbon-containing gas stream (10);
(b) cooling the contaminated hydrocarbon-containing gas stream (10) in a first heat exchanger (3) thereby obtaining a cooled contaminated hydrocarbon-containing gas stream (40);
(c) cooling the cooled contaminated hydrocarbon-containing gas stream (40) in an expander (4) thereby obtaining a multiphase stream (50);
(d) separating the multiphase stream (50) in a separator (5) thereby obtaining a gaseous stream (60) and a slurry stream (70);
(e) separating the slurry stream (70) in a solid/liquid separator (6) thereby obtaining a liquid hydrocarbon stream (90) and a concentrated slurry stream (80);
(f) passing at least a part of the gaseous stream (60) obtained in step (d) through the first heat exchanger (3) thereby obtaining a heated gaseous stream (120); and
(g) combining the heated gaseous stream obtained (120) in step (f) with the contaminated hydrocarbon-containing gas stream (10) provided in step (a).

## Description

The present invention relates to a method of liquefying a contaminated hydrocarbon-containing gas stream, in particular a methane-containing contaminated gas stream such as natural gas.

Methods of liquefying hydrocarbon-containing gas streams are well known in the art. It is desirable to liquefy a hydrocarbon-containing gas stream such as natural gas stream for a number of reasons. As an example, natural gas can be stored and transported over long distances more readily as a liquid than in gaseous form, because it occupies a smaller volume and does not need to be stored at high pressures. Typically, before being liquefied, the contaminated hydrocarbon-containing gas stream is treated to remove one or more contaminants (such as H₂O, CO₂, H₂S and the like) which may freeze out during the liquefaction process.

A problem of known methods of liquefying a contaminated hydrocarbon-containing gas stream is that it is a rather complex process, requiring a lot of expensive equipment.

It is an object of the present invention to solve or at least minimize the above problem.

It is a further object of the present invention to provide a simpler and more cost-effective method of liquefying a contaminated hydrocarbon-containing gas stream, in particular a methane-containing contaminated gas stream such as natural gas.

It is another object to provide a method of liquefying a contaminated hydrocarbon-containing gas stream for small scale operations, i.e. having a production rate of at most 0.1 mtpa (million tons per annum).

One or more of the above or other objects are achieved according to the present invention by providing a method of liquefying a contaminated hydrocarbon-containing gas stream, the method comprising at least the steps of:
(a) providing a contaminated hydrocarbon-containing gas stream;
(b) cooling the contaminated hydrocarbon-containing gas stream in a first heat exchanger thereby obtaining a cooled contaminated hydrocarbon-containing gas stream;
(c) cooling the cooled contaminated hydrocarbon-containing gas stream in an expander thereby obtaining a multiphase stream;
(d) separating the multiphase stream in a separator thereby obtaining a gaseous stream and a slurry stream;
(e) separating the slurry stream in a solid/liquid separator thereby obtaining a liquid hydrocarbon stream and a concentrated slurry stream;
(f) passing at least a part of the gaseous stream obtained in step (d) through the first heat exchanger thereby obtaining a heated gaseous stream; and
(g) combining the heated gaseous stream obtained in step (f) with the contaminated hydrocarbon-containing gas stream provided in step (a).

An advantage of the method according to the present invention is that it has a surprisingly simple design and can be standardized to treat and liquefy a wide range of feed gas compositions. Further, there is relatively limited utility and chemicals requirement resulting in a significant OPEX and CAPEX reduction. Furthermore, the design is more robust with respect to trace contaminants such as rust and oil particles, compared to designs with amine treating systems.

As the method according to the present invention does not require connection to the grid (as the gaseous stream obtained in step (d) is combined with the contaminated hydrocarbon-containing stream provided in step (a)), the application of the method is very flexible. The method of the present invention is in particular suitable for small scale operations (production rate of at most 0.1 mtpa).

An important aspect of the present invention is that the liquid hydrocarbon product stream obtained in step (e) may have a different composition, e.g. containing more CO₂ (such as at least 250 ppm-mol) and more C₅₊ (such as above 0.1 mol%) than usual.

In step (a), a contaminated hydrocarbon-containing gas stream is provided. Although the contaminated hydrocarbon-containing gas stream is not particularly limited, it preferably is a methane-rich gas stream such as natural gas. According to a preferred embodiment, the contaminated hydrocarbon-containing gas stream comprises at least 50 mol% methane, preferably at least 80 mol%. Preferably, the hydrocarbon fraction of the contaminated hydrocarbon-containing gas stream comprises especially at least 75 mol% of methane, preferably at least 90 mol%. The hydrocarbon fraction in the natural gas stream may suitably contain from between 0 and 25 mol% of C₂₊-hydrocarbons (i.e. hydrocarbons containing 2 or more carbon atoms per molecule), preferably between 0 and 20 mol% of C₂-C₆ hydrocarbons, more preferably between 0.3 and 18 mol% of C₂-C₄ hydrocarbons, especially between 0.5 and 15 mol% of ethane.

The contaminant is also not particularly limited. Typically, the contaminant is one or more of e.g. CO₂, H₂S, H₂O, C₆₊ hydrocarbons, aromatic compounds, etc. but is in particular CO₂.

The amount of contaminant in the contaminated hydrocarbon-containing gas stream is suitably between 5 and 90 mol%, preferably between 10 and 50 mol%.

Before cooling in step (b), the contaminated hydrocarbon-containing gas stream may have been treated. As an example, if the contaminated hydrocarbon-containing gas stream contains water (e.g. more than 1 ppmv), then the contaminated hydrocarbon-containing gas stream may be dehydrated to prevent hydrate formation in the subsequent cooling steps. As the person skilled in the art is familiar with dehydration of gas streams (e.g. using adsorption by desiccants) this is not further discussed here. Preferably, methanol is injected into the contaminated hydrocarbon-containing gas stream to prevent the formation of hydrates.

In step (b), the contaminated hydrocarbon-containing gas stream is cooled in a first heat exchanger thereby obtaining a cooled contaminated hydrocarbon-containing gas stream. The heat exchanger is not particularly limited, but is preferably an indirect heat exchanger. Preferably, in step (b) no solids and/or liquids are formed; hence, the cooled contaminated hydrocarbon-containing gas stream is preferably free of solids and/or liquids.

Preferably, the cooled contaminated hydrocarbon-containing gas stream obtained in step (b) has a temperature of at most -40°C, preferably at most -50°C, more preferably at most -60°C.

In step (c), the cooled contaminated hydrocarbon-containing gas stream is cooled in an expander thereby obtaining a multiphase stream. Typically, the multiphase stream as obtained in step (c) contains at least a vapour phase, a liquid phase and a solid phase. Typically, the multiphase stream contains at least 50 mol% vapour.

Although the expander as used in step (c) according to the present invention is not particularly limited (and may include a JT valve an orifice, a common expander, etc.), it is preferred that in the expander enthalpy is withdrawn from the cooled contaminated hydrocarbon-containing gas stream. A suitable expander for withdrawing enthalpy whilst expanding is a turboexpander. Preferably, the cooled contaminated hydrocarbon-containing gas stream as fed into the expander has a pressure of from 40 to 200 bara, more preferably from 60 to 100 bara. The multiphase stream as removed from the expander typically has a pressure of from 1 to 10 bara, preferably below 7 bara, more preferably below 3 bara.

Preferably, the multiphase stream obtained in step (c) has a temperature of at most -100°C (i.e. not warmer than -100°C), preferably at most -120°C, more preferably at most -140°C, most preferably at most -150°C.

In step (d), the multiphase stream is separated in a (first) separator thereby obtaining a gaseous stream and a slurry stream.

In step (e), the slurry stream is separated in a (second) solid/liquid separator thereby obtaining a liquid hydrocarbon stream and a concentrated slurry stream. Typically, the concentrated slurry stream is rich in contaminants. The concentrated slurry stream may comprise more than one contaminant. The concentrated slurry stream usually contains at least 20 mol% contaminant(s) and at most 80 mol% methane. If (one of) the contaminant(s) in the concentrated slurry stream is CO₂, then the concentrated slurry stream preferably comprises at least 25 mol% CO₂. Preferably, the concentrated slurry stream is heated to melt and/or evaporate the contaminant(s). Preferably, the concentrated slurry stream is melted to obtain a liquid contaminant stream (typically containing at least 80 mol% C₅₊) and a gaseous contaminant stream (typically containing at least 80 mol% CO₂/N₂, if the contaminant comprises CO₂). As the gaseous contaminant stream may still comprise some hydrocarbons, it may be recycled to be used as (part of) a fuel stream.

In step (f), at least a part of the gaseous stream obtained in step (d) is passed through the first heat exchanger thereby obtaining a heated gaseous stream. The heated gaseous stream typically comprises at least 80 mol% methane and at most 20 mol% N₂.

In step (g), the heated gaseous stream obtained in step (f) is combined with the contaminated hydrocarbon-containing gas stream provided in step (a). Typically, the heated gaseous stream obtained in step (f) is compressed to a pressure equal to the pressure of the contaminated hydrocarbon-containing gas stream provided in step (a), before being combined therewith. An advantage of combining the (lean) heated gaseous stream with the contaminated hydrocarbon-containing gas stream is that the contaminant level in the feed is lowered, allowing deeper pre-cooling.

Preferably, the contaminated hydrocarbon-containing gas stream is compressed before being cooled in step (b). Further it is preferred that the contaminated hydrocarbon-containing gas stream is combined with the heated gaseous stream before being compressed.

Also, it is preferred that the slurry stream obtained in step (d) is pressurized before being separated in step (e), to minimize vapour generation.

Typically, at least 50 mol% of the gaseous stream obtained in step (d) is passed through the first heat exchanger in step (f) and combined in step (g) with the contaminated hydrocarbon-containing gas stream provided in step (a), preferably at least 60 mol%, more preferably at least 70 mol%, even more preferably at least 80 mol%, yet even more preferably at least 90 mol% or even 100 mol%. An advantage of passing and combining a major part or all of the gaseous stream obtained in step (d) is that no grid is needed to discharge this stream; as a result the method can be performed at remote locations.

In a further aspect the present invention provides a liquid hydrocarbon stream obtained in step (e) of the method according to the present invention, comprising at least 80 mol% methane and at least 250 ppm-mol CO₂. It is preferred that all the CO₂ is dissolved; hence the liquid hydrocarbon stream does preferably not contain solid CO₂. Further, the liquid hydrocarbon stream preferably comprises dissolved CO₂ up to saturation level at storage conditions; at a temperature of at most -100°C (preferably at most -150°C) the liquid hydrocarbon stream preferably comprises from 800 ppm-mol to 3.5 mol% CO₂.

Furthermore it is preferred that the liquid hydrocarbon stream further comprises above 0.1 mol% C₅₊, preferably at least 0.2 mol%, more preferably at least 0.5 mol%, even more preferably at least 0.8 mol% or even at least 1.0 mol%. In the context of the present invention, C₅₊ refers to hydrocarbons containing 5 or more carbon atoms per molecule, such as pentane, hexane and the like. Also, the liquid hydrocarbon stream preferably comprises at least 0.002 mol%, preferably at least 0.005 mol% benzene.

Hereinafter the invention will be further illustrated by the following non-limiting drawing. Herein shows:

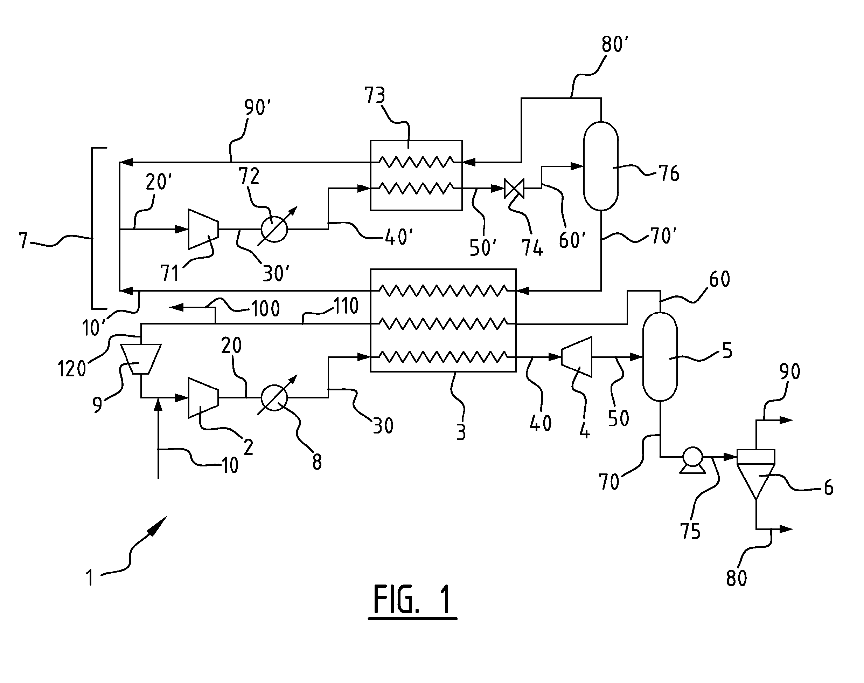

Fig. 1 schematically a process scheme for performing the method according to the present invention.

For the purpose of this description, same reference numbers refer to same or similar components.

Fig. 1 schematically shows a process scheme for performing a method of liquefying a contaminated hydrocarbon-containing gas stream. The process scheme is generally referred to with reference number 1.

The process scheme 1 comprises a compressor 2, a heat exchanger 3 ("the first heat exchanger"), an expander 4, a first separator 5, a second separator 6, a refrigerant cycle 7 and a compressor 9. As also shown in Figure 1, the process scheme may comprise further heat exchangers in addition to the first heat exchanger 3, including a heat exchanger 8 between the compressor 2 and the first heat exchanger 3. The refrigerant cycle 7 is not limited in any way and in the embodiment of Figure 1 it is a CO₂ refrigerant cycle (i.e. using CO₂ as the refrigerant), comprising a compressor 71, heat exchanger 72, heat exchanger 73, JT-valve 74 and separator 76. The bottom stream 70' coming from the separator 76 is used as the coolant in the first heat exchanger 3.

During use of the process scheme 1 according to the present invention, a contaminated hydrocarbon-containing gas stream 10 is provided. This contaminated hydrocarbon-containing gas stream 10 is typically a natural gas stream. The contaminated hydrocarbon-containing gas stream 10 is cooled in the first heat exchanger 3 thereby obtaining a cooled contaminated hydrocarbon-containing gas stream 40. The first heat exchanger 3 is an indirect heat exchanger; hence no direct contact between the streams takes place, but only heat exchanging contact.

As shown in the embodiment of Figure 1, the contaminated hydrocarbon-containing gas stream 10 is compressed in compressor 2 and passed as stream 20 to and cooled in heat exchanger 8 before being cooled as stream 30 in the first heat exchanger 3. If desired methanol may be injected into e.g. stream 20 to prevent hydrate formation.

The cooled contaminated hydrocarbon-containing gas stream 40 is further cooled in the expander 4 thereby obtaining a multiphase stream 50. It is preferred that, before cooling in the expander 4, the cooled contaminated hydrocarbon-containing gas stream 40 does not contain liquids and/or solids. The multiphase stream 50 is separated in the first separator 5 thereby obtaining a gaseous stream 60 and a slurry stream 70.

The slurry stream 70 is separated in the second (solid/liquid) separator 6 thereby obtaining a liquid hydrocarbon stream 90 and a concentrated slurry stream 80. The second separator 6 is not particularly limited and can for example be selected from a cyclone, settler, filter or a combination thereof.

The liquid hydrocarbon stream 90 is the product stream and is typically an LNG stream. The liquid stream 90 as obtained according to the present invention may have a composition that is different from known compositions, in terms of CO₂ and C₅₊.

If desired, part of the stream 90 may be recycled to the first separator 5 and sprayed into it as a washing fluid (not shown) to enhance the separation in the first separator 5; instead or in addition, also a separate cold liquid stream may be used.

The concentrated slurry stream 80 may be further processed if desired; typically, it is a CO₂-rich stream. Preferably, the concentrated slurry stream 80 is heated and separated into a liquid and gaseous phase; the gaseous phase may be combined with a fuel gas stream.

If desired, the slurry stream 70 may be pumped to higher pressure (not shown) before being separated in the second separator 6.

At least a part (or all; typically at least 50 mol%, preferably at least 80 mol%) of the gaseous stream 60 is passed through the first heat exchanger 3 thereby obtaining a heated gaseous stream 110; if desired some inerts (such as N₂) may be removed from the heated gaseous stream 110 as (minor) stream 100. As stream 60 is used to cool the stream 30, this is an "autorefrigeration" step. The heated gaseous stream 120 is combined with the contaminated hydrocarbon-containing gas stream 10. As shown in the embodiment of Figure 1, the contaminated hydrocarbon-containing gas stream 10 is combined with the heated gaseous stream 120 before being compressed in compressor 2. Typically, the heated gaseous stream 120 is compressed (in compressor 8) to a pressure equal to the pressure of the contaminated hydrocarbon-containing gas stream 10, before being combined therewith.

The CO₂ refrigerant cycle 7 is a common refrigerant cycle. In the CO₂ refrigerant cycle 7 gaseous stream 10' is combined with gaseous stream 90' and compressed as stream 20' in compressor 71, cooled as stream 30' in heat exchanger 72, further cooled as stream 40' in heat exchanger 73 and expanded as stream 50' to obtain a multiphase stream 60' which is separated in separator 76. The gaseous overhead stream 80' removed from the separator 76 is heated in heat exchanger 73 to obtain stream 90'. The bottom stream 70' removed from the separator 76 is used to cool stream 30 in the first heat exchanger 3. After passing through the first heat exchanger 3, the stream 90' is reused in the cycle as stream 10'. It goes without saying that instead of a CO₂ refrigerant cycle, a different refrigerant cycle can be used.

Table 1 below shows an actual non-limiting example, providing information on conditions and composition of the various streams, whilst using the scheme of Figure 1 for processing a natural gas stream contaminated with CO₂. The composition of LNG stream 90 is given in Table 2. Stream 120 comprised 84% of stream 110 (and stream 100 16%).

**Table 1. Composition and properties of various streams**

| Stream | Pressure [bara] | Temp. [°C] | State | Amount of CH₄ [mol%] | Amount of CO₂ [mol%] | Amount of C₂₊ [mol%] | Amount of N₂ [mol%] |
|---|---|---|---|---|---|---|---|
| 10 | 45 | 40 | Gas | 81.0 | 2.0 | 14.0 | 3.0 |
| 20 | 90 | 100 | Gas | 85.5 | 0.8 | 5.9 | 7.8 |
| 30 | 90 | 30 | Gas | 85.5 | 0.8 | 5.9 | 7.8 |
| 40 | 90 | -63 | Gas | 85.5 | 0.8 | 5.9 | 7.8 |
| 50 | 2 | -153 | Gas/liquid/solid | 85.5 | 0.8 | 5.9 | 7.8 |
| 60 | 2 | -153 | Gas | 88.0 | 12.0 | - | - |
| 70 | 2 | -153 | Liquid/solid | 82.0 | 0.5 | 16.0 | 1.5 |
| 75 | 6 | -153 | Liquid/solid | 82.0 | 0.5 | 16.0 | 1.5 |
| 80 | 5 | -153 | Liquid/Solid | 46.0 | 43.0 | 10.7 | 0.3 |
| 90 | 5 | -152 | Liquid | 83.6 | 0.1 | 15.8 | 0.5 |
| 100 | 2 | -153 | Gas | 88.0 | 12.0 | - | - |
| 110 | 2 | -153 | Gas | 88.0 | 12.0 | - | - |
| 120 | 2 | -51 | Gas | 88.0 | 12.0 | - | - |

**Table 2. Composition of stream 90**

| Component | [mol%] |
|---|---|
| Nitrogen | 0.52 |
| CO₂ | 0.08 |
| Methane | 83.58 |
| Ethane | 7.94 |
| Propane | 4.54 |
| i-Butane | 1.14 |
| n-Butane | 1.14 |
| C₅₊ (sum of the below 4) | 1.06 |
| i-Pentane | 0.44 |
| n-Pentane | 0.44 |
| n-Hexane | 0.17 |
| Benzene | 0.01 |

As can be seen from Table 2, the composition of LNG stream 90 differs from a common LNG product (see e.g. "Small-scale LNG facility development", B.C. Price, Hydrocarbon Processing, January 2003) in that it contains more CO₂ (0.08 mol% vs. 0.0125 mol% in the above reference), and more benzene (0.01 mol% vs. 0.001 mol% in the above reference). Also, the composition of LNG stream 90 has an uncommonly high C₅₊ content (1.06 mol%, whilst it is typically lower).

The person skilled in the art will readily understand that many modifications may be made without departing from the scope of the invention.

## Claims

1. A method of liquefying a contaminated hydrocarbon-containing gas stream, the method comprising at least the steps of:
(a) providing a contaminated hydrocarbon-containing gas stream (10);
(b) cooling the contaminated hydrocarbon-containing gas stream (10) in a first heat exchanger (3) thereby obtaining a cooled contaminated hydrocarbon-containing gas stream (40);
(c) cooling the cooled contaminated hydrocarbon-containing gas stream (40) in an expander (4) thereby obtaining a multiphase stream (50);
(d) separating the multiphase stream (50) in a separator (5) thereby obtaining a gaseous stream (60) and a slurry stream (70);
(e) separating the slurry stream (70) in a solid/liquid separator (6) thereby obtaining a liquid hydrocarbon stream (90) and a concentrated slurry stream (80);
(f) passing at least a part of the gaseous stream (60) obtained in step (d) through the first heat exchanger (3) thereby obtaining a heated gaseous stream (120); and
(g) combining the heated gaseous stream obtained (120) in step (f) with the contaminated hydrocarbon-containing gas stream (10) provided in step (a).

2. The method according to claim 1, wherein the contaminated hydrocarbon-containing gas stream (10) comprises at least 50 mol% methane, preferably at least 80 mol%.

3. The method according to claim 1 or 2, wherein the cooled contaminated hydrocarbon-containing gas stream (40) obtained in step (b) has a temperature of at most - 40°C, preferably at most -50°C, more preferably at most - 60°C.

4. The method according to any one of claims 1-3, wherein the multiphase stream (50) obtained in step (c) has a temperature of at most -100°C, preferably at most - 120°C, more preferably at most -140°C, most preferably at most -150°C.

5. The method according to any one of claims 1-4, wherein the contaminated hydrocarbon-containing gas stream (10) is compressed before being cooled in step (b).

6. The method according to claim 5, wherein the contaminated hydrocarbon-containing gas stream (10) is combined with the heated gaseous stream (120) before being compressed.

7. The method according to any one of claims 1-6, wherein the slurry stream (70) obtained in step (d) is pressurized before being separated in step (e).

8. The method according to any one of claims 1-7, wherein at least 50 mol% of the gaseous stream (60) obtained in step (d) is passed through the first heat exchanger (3) in step (f) and combined in step (g) with the contaminated hydrocarbon-containing gas stream (10) provided in step (a), preferably at least 60 mol%, more preferably at least 70 mol%, even more preferably at least 80 mol%, yet even more preferably at least 90 mol%.

9. Liquid hydrocarbon stream (90) obtained in step (e) of the method according to any of the claims 1-8, comprising at least 80 mol% methane and at least 250 ppm-mol CO₂.

10. Liquid hydrocarbon stream (90) according to claim 9, further comprising above 0.1 mol% C₅₊, preferably at least 0.2 mol%, more preferably at least 0.5 mol%, even more preferably at least 0.8 mol% or even at least 1.0 mol%.

11. Liquid hydrocarbon stream (90) according to claim 9 or 10, further comprising at least 0.002 mol%, preferably at least 0.005 mol% benzene.
